# EUROPÄISCHE PATENTANMELDUNG

(11) **EP 4 070 986 A1**
(43) Veröffentlichungstag der Anmeldung: **12.10.2022**
(21) Anmeldenummer: 22163785.3
(22) Anmeldetag: 23.03.2022
(51) Int. Cl.: B60L 58/26, B60L 58/27, H01M 10/613, H01M 10/615, H01M 10/625, H01M 10/633, H01M 10/635

(54) **VERFAHREN UND VORRICHTUNG ZUM TEMPERIEREN EINES FAHRZEUGTEILS EINES KRAFTFAHRZEUGS MIT EINEM ELEKTRISCHEM ENERGIESPEICHER**

(30) Priorität: 07.04.2021 DE 102021203413
(71) Anmelder: Robert Bosch GmbH, 70442 Stuttgart (DE)
(72) Erfinder: Heyse, Joerg, 74354 Besigheim (DE); Gutekunst, Claudia, 72649 Wolfschlugen (DE); Jaksch, Theresa, 74394 Hessigheim (DE); Schieferstein, Anne, 35584 Wetzlar (DE); Koertel, Falk-Tillmann, 36251 Bad Hersfeld (DE); Medvecky, Milos, 71679 Asperg (DE); Dias Panza, Rodrigo, 33110 Le Bouscat (FR); Raupach, Norma, 14929 Treuenbrietzen (DE); Schneider, Jennifer, 72762 Reutlingen (DE); Rauscher, Matthias, 89075 Ulm (DE); Florez Ibanez, Lucero, 70173 Stuttgart (DE); Schoen, Patrik, 35457 Lollar (DE); An, Ran, 71696 Moeglingen (DE); Selenin, Denis, 35085 Ebsdorfergrund (DE)

(57) **Zusammenfassung**

Die Erfindung betrifft ein Verfahren zum Betreiben eines Kraftfahrzeugs (1) durch Temperieren eines oder mehrerer Fahrzeugteile (3,4), insbesondere einer Fahrzeugbatterie und/oder eines Fahrzeugkabineninneren, mit folgenden Schritten:
- Vorgeben (S2) einer Angabe für einen voraussichtlichen Fahrtbeginnzeitpunkt (FBZ) des Kraftfahrzeugs (1) und einer gewünschten Betriebstemperatur (BT) des einen oder der mehreren Fahrzeugteile (3, 4);
- Aufwecken (S6) eines Steuergeräts (22), das ausgebildet ist, um ein Temperieren des jeweiligen Fahrzeugteils (3, 4) zu steuern, zu einem Temperierstartzeitpunkt (A2), der so gewählt ist, dass bei einem Beginn eines Aufheizens bzw. Abkühlens zu dem Temperierstartzeitpunkt (A2) das Aufheizen bzw. Abkühlen mit einem Erreichen der gewünschten Betriebstemperatur (BT) des entsprechenden Fahrzeugteils (3, 4) zu einem Zeitpunkt beendet ist, der dem voraussichtlichen Fahrtbeginnzeitpunkt (FBZ) entspricht oder unmittelbar vor dem voraussichtlichen Fahrtbeginnzeitpunkt (FBZ) liegt.

## Beschreibung

### Technisches Gebiet

Die Erfindung betrifft Kraftfahrzeuge mit einem elektrischen Energiespeicher als Energiequelle, und insbesondere Verfahren zum Temperieren, d.h. zum Aufheizen oder Abkühlen, eines Fahrzeugteils, insbesondere einer Fahrzeugbatterie oder eines Fahrzeugkabineninneren.

### Technischer Hintergrund

Elektrisch betriebene Kraftfahrzeuge weisen in der Regel einen elektrischen Energiespeicher, insbesondere in Form einer Traktionsbatterie oder einer Brennstoffzelleneinheit, auf. Zum Bereitstellen der vollen Leistungsfähigkeit des elektrischen Energiespeichers ist eine Betriebstemperatur notwendig, die in der Regel deutlich über einer Umgebungstemperatur liegt. Bei Fahrtbeginn ist es somit häufig sinnvoll, den Energiespeicher zuvor auf eine Betriebstemperatur bzw. eine Fahrtbeginntemperatur aufzuheizen, um so zum einen die volle Leistungsfähigkeit der Fahrzeugbatterie bereitzustellen und zum anderen eine zu starke Belastung des Energiespeichers zu vermeiden.

In anderen Fällen, insbesondere bei einem Betrieb des elektrisch betriebenen Kraftfahrzeugs bei niedrigen Außentemperaturen, ist es wünschenswert, dass zum Fahrtbeginn das Fahrzeugkabineninnere aufgewärmt wird, um dem Fahrer bereits zu Fahrtbeginn eine angenehme Fahratmosphäre zu schaffen.

Die Heizenergie zum Aufheizen des entsprechenden Fahrzeugteils, wie z. B. des elektrischen Energiespeichers bzw. des Fahrzeugkabineninneren, wird in der Regel aus dem elektrischen Energiespeicher bezogen.

Die Druckschrift DE 10 2005 022 204 B1 offenbart ein Verfahren zum Aufheizen einer Batterie in einem Fahrzeug mit einem Batterieheizgerät, wobei ein Schlüssel-Aus-Zustand bestimmt wird und ein Energiefluss von der Batterie zu dem Heizgerät nach Feststellen des Schlüssel-Aus-Zustands ermöglicht wird. Ein Energiefluss von der Batterie zu einem Heizgerät wird durch ein Steuergerät ermöglicht, das, bevor es den Energiefluss von der Batterie zu dem Heizgerät ermöglicht, in einen Ruhezustand versetzt, wenn der Schlüssel-Aus-Zustand festgestellt wurde. Weiterhin wird das Steuergerät in einen Aktivmodus versetzt, so dass der Energiefluss von der Batterie zu dem Heizgerät zum Aufheizen der Batterie ermöglich wird.

Die Druckschrift DE 10 2014 204 260 A1 offenbart ein Verfahren zum Steuern eines Elektrofahrzeugs, das mit einer externen Stromquelle verbunden ist. Das Verfahren umfasst das Aufladen einer Traktionsbatterie auf einen angezielten Ladezustand und das Konditionieren der Batterie auf eine angezielte Batterietemperatur gemäß einem Ladeprofil, das auf einer Benutzer-initiierten Anfrage zur Fahrzeugkonditionierung basiert.

### Offenbarung der Erfindung

Erfindungsgemäß sind ein Verfahren zum Betreiben eines Kraftfahrzeugs durch Temperieren mindestens eines Fahrzeugteils vor einem Fahrtbeginn gemäß Anspruch 1 sowie eine entsprechende Vorrichtung und ein Kraftfahrzeug gemäß den nebengeordneten Ansprüchen vorgesehen.

Weitere Ausgestaltungen sind in den abhängigen Ansprüchen angegeben.

Gemäß einem ersten Aspekt ist ein Verfahren zum Betreiben eines Kraftfahrzeugs durch Temperieren eines oder mehrerer Fahrzeugteile, insbesondere einer Fahrzeugbatterie und/oder einer Brennstoffzelle und/oder eines Fahrzeugkabineninneren, vorgesehen, mit folgenden Schritten:
- Vorgeben einer Angabe für einen voraussichtlichen Fahrtbeginnzeitpunkt des Kraftfahrzeugs und einer gewünschten Betriebstemperatur des einen oder der mehreren Fahrzeugteile;
- Aufwecken eines Steuergeräts, das ausgebildet ist, um ein Temperieren des jeweiligen Fahrzeugteils zu steuern, zu einem Temperierstartzeitpunkt, der so gewählt ist, dass bei einem Beginn eines Aufheizens bzw. Abkühlens zu dem Temperierstartzeitpunkt das Aufheizen bzw. Abkühlen mit einem Erreichen der gewünschten Betriebstemperatur des entsprechenden Fahrzeugteils zu einem Zeitpunkt beendet ist, der dem Fahrtbeginnzeitpunkt entspricht oder unmittelbar vor dem Fahrtbeginnzeitpunkt liegt.

Das Temperieren eines Fahrzeugteils vor einem Fahrtbeginn kann beispielsweise aus Gründen der dafür bereitzustellenden Leistung, des bereitzustellenden Wirkungsgrads oder aus Komfortgründen erfolgen. Da insbesondere, wenn die elektrische Energie zum Temperieren des Fahrzeugteils aus der Fahrzeugbatterie bezogen wird, der Temperiervorgang, d.h. ein Aufheizvorgang oder ein Abkühlvorgang, möglichst energieeffizient durchgeführt werden soll, sollten Phasen vermieden werden, in denen eine Temperatur des Fahrzeugteils über einen längeren Zeitraum gegenüber einer Temperaturdifferenz zur Fahrzeugumgebung konstant gehalten werden muss. Dazu ist vorgesehen, das Aufheizen/Abkühlen des Fahrzeugteils so durchzuführen, dass der Temperiervorgang unmittelbar zum voraussichtlichen Fahrtbeginnzeitpunkt endet. Damit kann vermieden werden, dass nach dem Ende des Aufheizens bzw. Abkühlens die Temperatur des Fahrzeugteils über eine längere Zeitdauer bei hohem Energieaufwand beibehalten werden muss.

Es ist vorgesehen, dass nach dem Abstellen des Kraftfahrzeugs ein Aufwecken Zeitpunkt des Auftretens des Steuergeräts bestimmt wird. Der Aufweckzeitpunkt des Aufweckens des Steuergeräts ist vorzugsweise so gewählt, dass ein Temperieren auf die Betriebstemperatur selbst bei einer Temperatur des Fahrzeugteils, der einer zu dem Aufweckzeitpunkt prädizierten Umgebungstemperatur des Kraftfahrzeugs entspricht, in jedem Fall erreicht werden kann.

Insbesondere kann zu dem Aufweckzeitpunkt unter Berücksichtigung einer Temperaturangleichungskurve (Abkühlkurve oder Aufwärmkurve bis zu einem Temperierstartzeitpunkt und Aufwärmkurve oder Abkühlkurve bis zum Fahrtbeginnzeitpunkt) ausgehend von der Temperatur des Fahrzeugteils zum Aufweckzeitpunkt des Aufweckens des Steuergeräts, der Umgebungstemperatur während des Aufweckzeitpunkts, eines Wärmeübergangskoeffizienten zwischen Fahrzeugteil und der Umgebung und einer thermischen Masse des Fahrzeugteils und basierend auf Temperierparametern, insbesondere einer bereitgestellten Heiz- oder Kühlleistung und sonstigen Wärmeenergiequellen, der Verlauf der Temperatur des Fahrzeugteils nach dem Aufweckzeitpunkt ermittelt werden. Dabei wird der Temperierstartzeitpunkt so gewählt, dass die gewünschte Betriebstemperatur des Fahrzeugteils zum voraussichtlichen Fahrtbeginnzeitpunkt erreicht wird.

Zum Aufweckzeitpunkt wird entsprechend aus der Temperaturangleichungskurve ein Temperierstartzeitpunkt ermittelt, zu dem das Aufheizen/Abkühlen begonnen werden soll.

Nun wird das Steuergerät wieder in den Standby-Modus versetzt und zu dem Temperierstartzeitpunkt wieder aufgeweckt, um den Temperiervorgang zu starten. Dadurch ist es möglich, den Heizvorgang/Abkühlvorgang so zu starten, dass das entsprechende Fahrzeugteil zum Fahrtbeginnzeitpunkt die gewünschte Betriebstemperatur gerade oder unmittelbar zuvor erreicht hat.

Weiterhin kann vorgesehen sein, dass, wenn die Betriebstemperatur erreicht ist, oder der voraussichtliche Fahrtbeginnzeitpunkt erreicht ist, der Temperiervorgang des Fahrzeugteils gestoppt wird. Dies gilt insbesondere für Fahrzeugteile, deren thermische Masse hoch ist und bei denen ein Abkühlvorgang nur langsam erfolgt. Dies ist beispielsweise bei Fahrzeugbatterien der Fall.

Bei Fahrzeugteilen mit geringerer thermischer Masse, wie beispielsweise des Fahrzeugkabineninneren, kann nach dem Erreichen der gewünschten Betriebstemperatur diese weiter beheizt oder gekühlt werden, insbesondere für eine vorbestimmte Zeitdauer, wenn ein Fahrtbeginn zum voraussichtlichen Fahrtbeginnzeitpunkt noch nicht erfolgt ist und/oder solange bis ein Fahrtbeginn erfolgt ist.

Weiterhin kann der Temperierstartzeitpunkt zu einem ersten Aufweckzeitpunkt des Steuergeräts ermittelt werden, der einem Zeitpunkt einer vorbestimmten Zeitdauer vor dem Fahrtbeginnzeitpunkt entspricht.

Es kann vorgesehen sein, dass nach dem Ermitteln des Temperierstartzeitpunkts das Steuergerät in einen Standby Modus versetzt wird.

Weiterhin kann mithilfe einer Timereinheit das Steuergerät zu dem Temperierstartzeitpunkt als zweiten Aufweckzeitpunkt aktiviert werden, um ein Abkühlen oder ein Aufheizen des einen oder der mehreren Fahrzeugteile zu starten.

Gemäß einer Ausführungsform kann das Steuergerät den Temperierstartzeitpunkt ermitteln, indem durch Iterieren eine Temperaturangleichungskurve modelliert wird, so dass eine Abkühlkurve oder Aufwärmkurve bis zu dem Temperierstartzeitpunkt und eine Aufwärmkurve oder Abkühlkurve von dem Temperierstartzeitpunkt bis zu dem Fahrtbeginnzeitpunkt so verläuft, dass zum Fahrtbeginnzeitpunkt die gewünschte Betriebstemperatur erreicht wird, wobei die Temperaturangleichungskurve abhängig von einer thermischen Masse des betreffenden Fahrzeugteils, eines Wärmeübergangskoeffizienten zwischen der betreffenden Fahrzeugteil und der Umgebung der Temperatur des Fahrzeugteils zum Temperierstartzeitpunkt und der gewünschten Betriebstemperatur modelliert wird.

Weiterhin kann nach Erreichen des voraussichtlichen Fahrtbeginnzeitpunkts die gewünschte Betriebstemperatur für eine vorbestimmte Zeitdauer beibehalten werden, insbesondere abhängig von einer thermischen Masse des betreffenden Fahrzeugteils.

Bei mehreren Fahrzeugteilen können unterschiedliche Temperierstartzeitpunkte bestimmt werden.

Es kann vorgesehen sein, dass der voraussichtliche Fahrtbeginnzeitpunkt von einem Benutzer vorgegeben wird oder von einem Mobilgerät empfangen wird oder von einem Nutzungsmodell vorgegeben wird, dass ausgebildet ist, um ein Nutzungsverhalten so zu modellieren, das abhängig von einem aktuellen Zeitpunkt ein nächster Fahrtbeginnzeitpunkt angegeben wird.

Gemäß einem weiteren Aspekt ist eine Vorrichtung zum Betreiben eines Kraftfahrzeugs durch Temperieren eines oder mehrerer Fahrzeugteile vorgesehen, insbesondere einer Fahrzeugbatterie und/oder eines Fahrzeugkabineninneren, wobei die Vorrichtung ausgebildet ist zum:
- Vorgeben einer Angabe für einen voraussichtlichen Fahrtbeginnzeitpunkt des Kraftfahrzeugs und einer gewünschten Betriebstemperatur des einen oder der mehreren Fahrzeugteile;
- Aufwecken eines Steuergeräts, das ausgebildet ist, um ein Temperieren des jeweiligen Fahrzeugteils zu steuern, zu einem Temperierstartzeitpunkt, der so gewählt ist, dass bei einem Beginn eines Aufheizens bzw. Abkühlens zu dem Temperierstartzeitpunkt das Aufheizen bzw. Abkühlen mit einem Erreichen der gewünschten Betriebstemperatur des entsprechenden Fahrzeugteils zu einem Zeitpunkt beendet ist, der dem Fahrtbeginnzeitpunkt entspricht oder unmittelbar vor dem Fahrtbeginnzeitpunkt liegt.

### Kurzbeschreibung der Zeichnungen

Ausführungsformen werden nachfolgend anhand der beigefügten Zeichnungen näher erläutert. Es zeigen:
- Figur 1: eine schematische Darstellung eines Fahrzeugs mit einer Fahrzeugbatterie, insbesondere zum Bereitstellen von elektrischer Energie für einen Traktionsantrieb des Fahrzeugs;
- Figur 2: ein Flussdiagramm zur Veranschaulichung eines Verfahrens zum Betreiben des Temperiersystems in einem Kraftfahrzeug; und
- Figur 3: eine Darstellung einer Abkühl- und Aufheizkurve für ein Fahrzeugteil.

### Beschreibung von Ausführungsformen

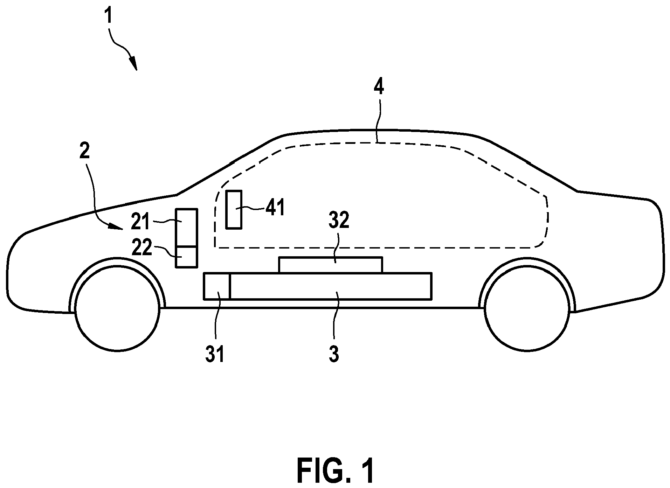

Figur 1 zeigt eine schematische Darstellung eines Kraftfahrzeugs 1 mit einer Temperiereinrichtung 2 für ein Fahrzeugteil. Das Fahrzeugteil kann beispielsweise eine Fahrzeugbatterie 3 und/oder ein Fahrzeugkabineninneres 4 umfassend Innenraumoberflächen und Innenraumluft einer Fahrzeugkabine sein. Andere Fahrzeugteile können beispielsweise ein beheizbares Lenkrad, einen beheizbaren Fahrzeugsitz, eine Brennstoffzelleneinheit oder dergleichen umfassen.

Die Fahrzeugbatterie 3 kann mit einem Batteriemanagementsystem 31 versehen sein, das neben üblichen Funktionen auch eine Temperaturregelung der Fahrzeugbatterie 3 mithilfe einer Heiz und/oder Kühlvorrichtung 32 vorsehen kann. Die Heiz und/oder Kühlvorrichtung 32 ist an der Fahrzeugbatterie 3 so angeordnet, dass die Fahrzeugbatterie 3 durch Bereitstellen von Heizleistung erwärmt oder durch Bereitstellen von Kühlleistung gekühlt werden kann.

Analog kann die Fahrzeugkabine mit einem Klimasteuergerät 41 versehen sein, dass mithilfe einer Heiz und/oder Kühlvorrichtung 42 eine Temperaturregelung des Fahrzeugkabineninneren 4 durchgeführt werden kann.

Die Heiz und/oder Kühlvorrichtungen 32, 42 können über die Fahrzeugbatterie 3 oder über eine externe Energiequelle mit elektrischer Energie versorgt werden.

Sowohl das Batteriemanagementsystem 31 als auch das Klimasteuergerät 41 können entsprechend einer externen Vorgabe einen Heiz und/oder Kühlvorgang der Fahrzeugbatterie 3 bzw. des Fahrzeugkabineninneren 4 starten und beenden.

Die Temperiereinrichtung 2 umfasst eine Steuereinheit 21 und eine Timer-Einheit 22. die Steuereinheit 21 dient zum Durchführen von Berechnungen und zum Starten und Beenden von Heiz oder Kühlvorgängen in beheizbaren oder kühlbaren Fahrzeugteilen (z.B. Fahrzeugbatterie oder Fahrzeugkabineninnerem). Die Steuereinheit 21 kann weiterhin in einen Standby-Modus versetzt werden, in dem sie eine geringe Energieaufnahme aufweist. Der Standby-Modus der Steuereinheit 21 kann durch ein entsprechendes Aufwecksignal beendet werden.

Die Timer-Einheit 22 dient lediglich dazu, einen Aufweckzeitpunkt zu speichern und eine sich im Standby befindliche Steuereinheit 21 zu dem Aufweckzeitpunkt aufzuwecken bzw. zu aktivieren.

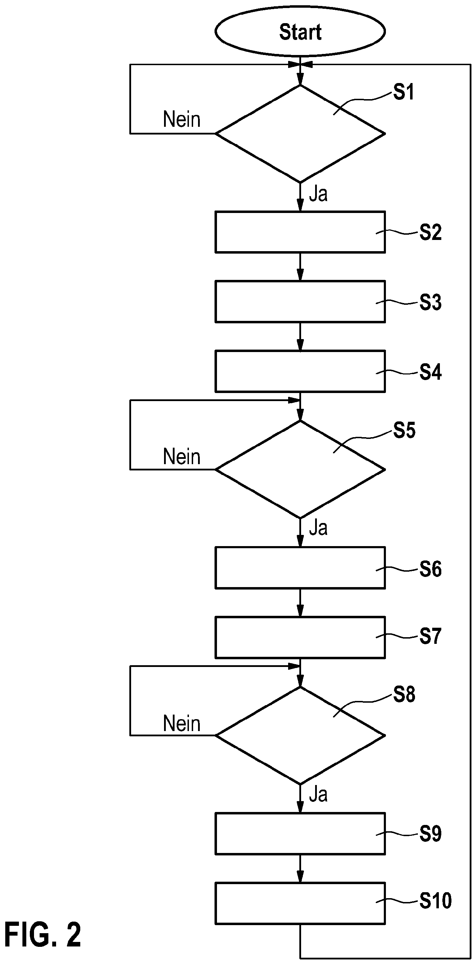

Das Temperiersystem umfasst die Heiz und/oder Kühlvorrichtung 32, 42, die Steuereinheit 21 und die Timer-Einheit 22. Das Temperiersystem ist ausgebildet, um das durch das Flussdiagramm der Figur 2 veranschaulichte Verfahren auszuführen. Der Einfachheit halber wird nachfolgend das Verfahren zum Temperieren eines Fahrzeugteils 3, 4 anhand eines Aufheizvorgangs der Fahrzeugbatterie 3 und des Fahrzeugkabineninneren 4 jeweils auf eine vorgegebene gewünschte Betriebstemperatur beschrieben, die größer ist als die Umgebungstemperatur. Das Verfahren lässt sich analog auch auf Abkühlen von Fahrzeugteilen 3, 4 anwenden.

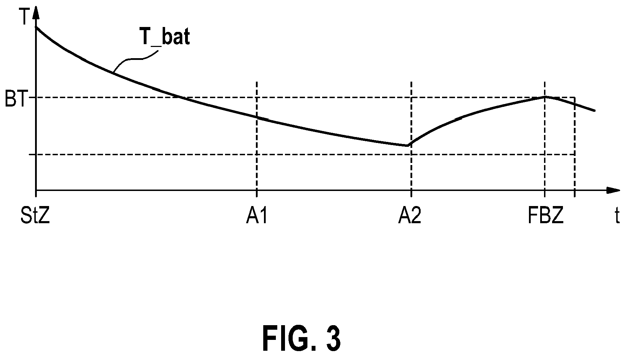

Das Verfahren wird weiterhin mit Bezug auf das Diagramm der Figur 3 beschrieben, dass eine beispielhafte Temperaturverlaufskurve über der Zeit t darstellt.

In Schritt S1 wird überprüft, ob das Fahrzeug abgestellt wurde. Das Abstellen des Fahrzeugs erfolgt in der Regel nach Beenden einer Fahrt und durch Aussteigen und Abschließen des Kraftfahrzeugs. Wird festgestellt, dass das Fahrzeug abgestellt wurde (Alternative: Ja), wird das Verfahren mit Schritt S2 fortgesetzt. Andernfalls (Alternative: Nein) wird zu Schritt S1 zurückgesprungen.

Zum Abstellzeitpunkt StZ, d.h. der Zeitpunkt des Abstellens des Kraftfahrzeugs, wird in Schritt S2 ein Fahrtbeginnzeitpunkt FBZ, d.h. der Zeitpunkt eines voraussichtlichen Fahrtbeginns, ermittelt. Dieser Fahrtbeginnzeitpunkt FBZ kann vorgegeben sein oder in geeigneter Weise als Information von einer externen Quelle, wie beispielsweise einem Mobilgerät oder einer Datenbank, abgerufen werden. Insbesondere kann der voraussichtliche Fahrtbeginnzeitpunkt FBZ aus einem Terminkalender des Fahrers oder Benutzers entnommen werden. Alternativ sind mathematische Nutzungsmodelle bekannt, die fahrerindividuell das zeitliche Nutzungsverhalten eines Fahrzeugs abbilden können und durch Abfrage eine kalendarische Zeiteingabe eines nächsten Fahrtbeginns angeben können. Die Nutzungsmodelle können datenbasiert mithilfe maschineller Lernverfahren trainiert werden. Beispielsweise können bei einer regelmäßigen Fahrt zur Arbeit und zurück während Wochentagen die Zeitpunkte für einen Fahrtbeginn, beispielsweise auf 8 Uhr morgens oder 5 Uhr abends an Wochentagen, angenommen werden.

In Schritt S3 wird insbesondere in der Steuereinheit 22 ein erster Aufweckzeitpunkt A1 ermittelt, der eine vorgegebene Zeitdauer, wie z.B. zwischen 2 und 6 Stunden, insbesondere von 4 Stunden, vor dem voraussichtlichen Fahrtbeginnzeitpunkt FBZ liegt. Insbesondere kann diese vorgegebene Zeitdauer so gewählt sein, dass sie ausreichend groß ist, damit ausgehend von jeder möglichen Temperatur des Fahrzeugteils zum ersten Aufweckzeitpunkt A1, insbesondere der Temperatur der Fahrzeugbatterie 3 oder des Fahrzeugkabineninneren 4, ein Aufheizen auf die jeweilige gewünschte Betriebstemperatur erreicht werden kann.

Die Betriebstemperatur BT ist bei Fahrzeugteilen, wie beispielsweise der Fahrzeugbatterie 3, fest vorgegeben und bauteilimmanent, während bei dem Fahrzeugkabineninneren die Betriebstemperatur vom Fahrer individuell vorgegeben werden kann, wahlweise über eine Bedieneinheit im Fahrzeug oder über ein Mobilgerät, das in Verbindung mit der Steuereinheit 21 des Fahrzeugs stehen kann.

Dieser erste Aufweckzeitpunkt wird in Schritt S4 an die Timer-Einheit 22 übermittelt und das Steuergerät 21 in einen Standby-Modus versetzt.

Nachfolgend wird in Schritt S5 in der Timer-Einheit 22 überprüft, ob der erste Aufweckzeitpunkt erreicht ist. Ist dies der Fall (Alternative: Ja), wird das Verfahren mit Schritt S6 fortgesetzt, anderenfalls (Alternative: Nein) wird zu Schritt S5 zurückgesprungen.

In Schritt S6 wird das Steuergerät 22 aufgeweckt, wonach das Steuergerät 22 einen zweiten Aufweckzeitpunkt A2 als Temperierstartzeitpunkt ermittelt, zu dem der Aufheizvorgang (Temperiervorgang des Fahrzeugteils) gestartet werden soll. Dieser zweite Aufweckzeitpunkt A2 wird ermittelt abhängig von einer Abkühlkurve des betreffenden Fahrzeugteils 3, 4 ausgehend von dem ersten Aufweckzeitpunkt A1 und einer Aufheizkurve ausgehend von dem zu bestimmenden zweiten Aufweckzeitpunkt A2, sodass das Aufheizen des Fahrzeugteils 3, 4 auf die Betriebstemperatur BT gerade zu dem voraussichtlichen Fahrtbeginnzeitpunkt FBZ endet, d.h. mehr als 0-5 Minuten vor dem voraussichtlichen Fahrtbeginnzeitpunkt FBZ.

Die Abkühlkurve und die Aufheizkurve werden basierend auf einer Umgebungstemperatur, einer thermischen Masse des betreffenden bzw. jeweiligen Fahrzeugteils, einem Wärmeübergangskoeffizienten zwischen dem Fahrzeugteil 3, 4 und der Umgebung und der verfügbaren Heizleistung (Temperierleistung, d.h. Heiz oder Kühlleistung) in an sich bekannter Weise ermittelt. Insbesondere kann der zweite Aufweckzeitpunkt A2 durch Iterieren des zwischen dem ersten Aufweckzeitpunkt A1 und dem voraussichtlichen Fahrtbeginnzeitpunkt bestimmt werden, wobei sich der jeweilige Temperaturhub abhängig von den Abkühl- und Aufheizkurven ergibt.

Das derartige Bestimmen des zweiten Aufweckzeitpunkt A2 ermöglicht es, dass keine oder nur in geringem Umfang zusätzliche elektrische Energie verbraucht wird, um die Temperatur des betreffenden Fahrzeugteils 3, 4 auf der gewünschten Betriebstemperatur zu halten, wenn der tatsächliche Fahrtbeginn dem voraussichtlichen Fahrtbeginnzeitpunkt entspricht.

Die Ermittlung des zweiten Aufweckzeitpunkts A2 kann auch basierend auf der verfügbaren elektrischen Energie erfolgen. Wenn die elektrische Energie aus der Fahrzeugbatterie 3 bezogen wird, kann das Durchführen des Aufheizvorgangs auch von dem Ladezustand abhängig gemacht werden. Unterschreitet der Ladezustand einen vorgegebenen Schwellenwert, kann das Durchführen des Aufheizvorgangs unterbunden werden, und es wird kein zweiter Aufweckzeitpunkt A2 festgelegt. Auch können für die Fahrzeugbatterie 3 und das Fahrzeugkabineninnere 4 unterschiedliche zweite Aufweckzeitpunkte A2 ermittelt werden. Bei einem niedrigen Ladezustand der Fahrzeugbatterie 3 kann auch nur das Aufheizen der Fahrzeugbatterie 3 durchgeführt werden, während das Fahrzeugkabineninnere nicht vor Fahrtbeginn geheizt wird.

Bei der Ermittlung der Abkühlkurve und der Aufheizkurve kann die Umgebungstemperatur berücksichtigt werden. Insbesondere können wetterabhängig von einer geographischen Fahrzeugposition Wetterinformationen abgerufen werden, die Änderungen der Umgebungstemperatur des Fahrzeugs berücksichtigen, so dass sich bei fallender Umgebungstemperatur ein früherer zweiter Aufweckzeitpunkt A2 ergibt als bei steigender Umgebungstemperatur.

Nach dem Ermitteln des zweiten Aufweckzeitpunkts A2 wird in Schritt S7 der zweite Aufweckzeitpunkt A2 an die Timer-Einheit 22 übermittelt und das Steuergerät 21 in den Standby-Modus zurückgesetzt.

In Schritt S8 wird durch die Timer-Einheit 22 überprüft, ob der zweite Aufweckzeitpunkt A2 erreicht worden ist. Ist dies der Fall (Alternative: Ja), wird das Verfahren mit Schritt S9 fortgesetzt, anderenfalls (Alternative: Nein) wird zu Schritt S8 zurückgesprungen.

In Schritt S9 wird der Aufheizvorgang des Fahrzeugteils, d. h. der Fahrzeugbatterie und/oder das Fahrzeugkabineninnere 4, gestartet. Zum Durchführen des Aufheizvorgangs bleibt das Steuergerät 21 aktiv und steuert die Heiz und/oder Kühlvorrichtung 32, 42 über das Batteriemanagementsystem 31 oder das Klimasteuergerät 41 zum Durchführen des Heizvorgangs an. Dabei wird kontinuierlich und überprüft, ob die Betriebstemperatur BT erreicht worden ist.

Je nach Art des Fahrzeugteils 3, 4 wird nach Erreichen der Betriebstemperatur BT das Aufheizen in Schritt S10 beendet, insbesondere wenn die thermische Masse des beheizten Fahrzeugteils 3, 4 sehr hoch ist, so dass eine Abkühlung nach dem voraussichtlichen Fahrtbeginnzeitpunkt (bei sich verzögerndem Fahrtbeginn) aufgrund einer niedrigeren Umgebungstemperatur nur langsam erfolgen würde. Dies kann beispielsweise bei einer Fahrzeugbatterie 3 der Fall sein.

Alternativ kann für Fahrzeugteile, die eine geringere thermische Masse aufweisen, wie z.B. das Fahrzeugkabineninnere, ebenfalls vorgesehen sein, die Betriebstemperatur nach Erreichen für eine vorbestimmte Zeitdauer beizubehalten, wenn der Fahrtbeginn nicht unmittelbar nach Erreichen der Betriebstemperatur erfolgt.

Das obige beispielhaft beschriebene Verfahren lässt sich in analoger Weise auch zum Einstellen von Betriebstemperaturen verwenden, die niedriger sind als die Umgebungstemperatur. So kann beispielsweise zu dem ersten Aufweckzeitpunkt A1 eine Fahrzeugkabinentemperatur ermittelt werden, die aufgrund einer hohen Umgebungstemperatur deutlich über der eingestellten Betriebstemperatur BT liegt. In analoger Weise kann unter Berücksichtigung der zur Verfügung stehenden elektrischen Energie, einer Kühlleistung, einer thermischen Masse und einem Wärmeübergangskoeffizienten der zweite Aufweckzeitpunkt A2 so bestimmt werden, dass das Herunterkühlen des Fahrzeugkabineninneren 4 bis zum voraussichtlichen Fahrtbeginnzeitpunkt vorgenommen werden kann.

## Patentansprüche

1. Verfahren zum Betreiben eines Kraftfahrzeugs (1) durch Temperieren eines oder mehrerer Fahrzeugteile (3,4), insbesondere einer Fahrzeugbatterie und/oder eines Fahrzeugkabineninneren, mit folgenden Schritten:
- Vorgeben (S2) einer Angabe für einen voraussichtlichen Fahrtbeginnzeitpunkt (FBZ) des Kraftfahrzeugs (1) und einer gewünschten Betriebstemperatur (BT) des einen oder der mehreren Fahrzeugteile (3, 4);
- Aufwecken (S6) eines Steuergeräts (22), das ausgebildet ist, um ein Temperieren des jeweiligen Fahrzeugteils (3, 4) zu steuern, zu einem Temperierstartzeitpunkt (A2), der so gewählt ist, dass bei einem Beginn eines Aufheizens bzw. Abkühlens zu dem Temperierstartzeitpunkt (A2) das Aufheizen bzw. Abkühlen mit einem Erreichen der gewünschten Betriebstemperatur (BT) des entsprechenden Fahrzeugteils (3, 4) zu einem Zeitpunkt beendet ist, der dem voraussichtlichen Fahrtbeginnzeitpunkt (FBZ) entspricht oder unmittelbar vor dem voraussichtlichen Fahrtbeginnzeitpunkt (FBZ) liegt.

2. Verfahren nach Anspruch 1, wobei der Temperierstartzeitpunkt (A2) ermittelt wird zu einem ersten Aufweckzeitpunkt des Steuergeräts (22), der einem Zeitpunkt einer vorbestimmten Zeitdauer vor dem Fahrtbeginnzeitpunkt entspricht.

3. Verfahren nach Anspruch 2, wobei nach dem Ermitteln des Temperierstartzeitpunkts das Steuergerät (22) in einen Standby Modus versetzt wird.

4. Verfahren nach Anspruch 3, wobei mithilfe einer Timereinheit (21) das Steuergerät (22) zu dem Temperierstartzeitpunkt (A2) als zweiten Aufweckzeitpunkt aktiviert wird, um ein Abkühlen oder ein Aufheizen des einen oder der mehreren Fahrzeugteile (3, 4) zu starten.

5. Verfahren nach einem der Ansprüche 1-4, wobei das Steuergerät (22) den Temperierstartzeitpunkt ermittelt, indem durch Iterieren eine Temperaturangleichungskurve modelliert wird, so dass eine Abkühlkurve oder Aufwärmkurve bis zu dem Temperierstartzeitpunkt (A2) und eine Aufwärmkurve oder Abkühlkurve von dem Temperierstartzeitpunkt bis zu dem Fahrtbeginnzeitpunkt so verläuft, dass zum Fahrtbeginnzeitpunkt (FBZ) die gewünschte Betriebstemperatur (BT) erreicht wird, wobei die Temperaturangleichungskurve abhängig von einer thermischen Masse des betreffenden Fahrzeugteils (3, 4), eines Wärmeübergangskoeffizienten zwischen der betreffenden Fahrzeugteil (3, 4) und der Umgebung, der Temperatur des Fahrzeugteils (3, 4) zum Temperierstartzeitpunkt und der gewünschten Betriebstemperatur (BT) modelliert wird.

6. Verfahren nach einem der Ansprüche 1-5, wobei nach Erreichen des voraussichtlichen Fahrtbeginnzeitpunkts (FBZ) die gewünschte Betriebstemperatur (BT) für eine vorbestimmte Zeitdauer beibehalten wird, insbesondere abhängig von einer thermischen Masse des betreffenden Fahrzeugteils (3, 4).

7. Verfahren nach einem der Ansprüche 1-6, wobei bei mehreren Fahrzeugteilen (3, 4) unterschiedliche Temperierstartzeitpunkte (A2) bestimmt werden.

8. Verfahren nach einem der Ansprüche 1-7, wobei der voraussichtliche Fahrtbeginnzeitpunkt (FBZ) von einem Benutzer vorgegeben wird oder von einem Mobilgerät empfangen wird oder von einem Nutzungsmodell vorgegeben wird, dass ausgebildet ist, um ein Nutzungsverhalten so zu modellieren, das abhängig von einem aktuellen Zeitpunkt ein nächster Fahrtbeginnzeitpunkt (FBZ) angegeben wird.

9. Vorrichtung zum Betreiben eines Kraftfahrzeugs durch Temperieren eines oder mehrerer Fahrzeugteile (3, 4), insbesondere einer Fahrzeugbatterie und/oder eines Fahrzeugkabineninneren, wobei die Vorrichtung ausgebildet ist zum:
- Vorgeben einer Angabe für einen voraussichtlichen Fahrtbeginnzeitpunkt (FBZ) des Kraftfahrzeugs und einer gewünschten Betriebstemperatur (BT) des einen oder der mehreren Fahrzeugteile (3, 4);
- Aufwecken eines Steuergeräts (22), das ausgebildet ist, um ein Temperieren des jeweiligen Fahrzeugteils (3, 4) zu steuern, zu einem Temperierstartzeitpunkt, der so gewählt ist, dass bei einem Beginn eines Aufheizens bzw. Abkühlens zu dem Temperierstartzeitpunkt (A2) das Aufheizen bzw. Abkühlen mit einem Erreichen der gewünschten Betriebstemperatur des entsprechenden Fahrzeugteils (3, 4) zu einem Zeitpunkt beendet ist, der dem voraussichtlichen Fahrtbeginnzeitpunkt (FBZ) entspricht oder unmittelbar vor dem voraussichtlichen Fahrtbeginnzeitpunkt (FBZ) liegt.

10. Computerprogrammprodukt umfassend Befehle, die bei der Ausführung des Programms durch mindestens eine Datenverarbeitungseinrichtung diese veranlassen, die Schritte des Verfahrens nach einem der Ansprüche 1 bis 8 auszuführen.

11. Maschinenlesbares Speichermedium, umfassend Befehle, die bei der Ausführung durch mindestens eine Datenverarbeitungseinrichtung diese veranlassen, die Schritte des Verfahrens nach einem der Ansprüche 1 bis 8 auszuführen.
